Europäisches Patentamt

European Patent Office

Office européen des brevets

(19)

(11) Veröffentlichungsnummer: **0 143 955**
**A1**

(12) # EUROPÄISCHE PATENTANMELDUNG

(21) Anmeldenummer: **84112388.8**

(22) Anmeldetag: **13.10.84**

(51) Int. Cl.⁴: **H 02 M 3/28**

(30) Priorität: **04.11.83 US 549259**

(43) Veröffentlichungstag der Anmeldung:
**12.06.85 Patentblatt 85/24**

(84) Benannte Vertragsstaaten:
**AT BE CH DE FR GB IT LI LU NL SE**

(71) Anmelder: **CEAG Licht- und Stromversorgungstechnik GmbH**
**Senator-Schwartz-Ring 26**
**D-4770 Soest(DE)**

(72) Erfinder: **Greenhalgh, Frank Edwin**
**10, Robbins Avenue**
**Amityville New York 11701(US)**

(74) Vertreter: **Kempe, Wolfgang, Dr. et al,**
**c/o Brown, Boveri & Cie AG Postfach 351**
**D-6800 Mannheim 1(DE)**

(54) **Versorgungssystem.**

(57) Ein Versorgungssystem für eine gemeinsame Last (RL) ist aus mehreren parallel zueinander geschalteten einzelnen Versorgungsgeräten (10, 10'...) zusammengesetzt. Diese einzelnen Versorgungsgeräte sind so aufeinander abgestimmt, und so gesteuert, daß sie die Verbraucherlast (RL) mit im wesentlichen genau gleicher Spannung und genau gleichem Strom versorgen, unabhängig von Änderungen der Temperatur, der Kabelwiderstände und dergleichen. Dieses System ermöglicht zusätzliche Einstellungen und Veränderungen, insbesondere unterschiedliche Arten von Stromversorgungsleitungen.

Fig.1

EP 0 143 955 A1

C E A G    Licht-  und  Stromversorgungstechnik  G m b H
Mannheim                                    10.  Okt.  1984
Mp.-Nr.  646/84                            ZPT/P4 - Ft/Sd
US-PS 549 259

## Versorgungssystem

Die Erfindung betrifft ein Versorgungssystem nach dem Oberbegriff des Anspruches 1.

Die Erfindung betrifft insbesondere das Gebiet von Versorgungsgeräten, die parallel zueinander geschaltet sind, um eine gemeinsame Last mit Gleichstrom zu versorgen.

Ein derartiges System kann dazu verwendet werden, einen hohen Strom (z.B 1000 A) bei einer niedrigen Spannung (z.B. 1,5 bis 6 V) für einen Großcomputer zu erzeugen. Typischerweise benutzen Energieversorgungssysteme dieses Typs parallelgeschaltete Versorgungsgeräte, die jeweils eine bestimmte begrenzte Kapazität hin bis einigen hundert Ampere haben. Mit derartige Versorgungsgeräten wird in typischer Weise ein Wechselstrom gleichgerichtet und auf ungesteuerten unregulierten Gleichstrom gefiltert.

Dieser unregulierte Gleichstrom wird in eine hochfrequenzpulsbreitenmodulierte Wellenform umgeformt (z.B. bei 20kHz) und gleichgerichtet; ferner werden Impulse erzeugt, deren Arbeitstakt entsprechend der gewünschten Ausgangsgleichspannung gesteuert wird. Diese Impulsströme werden gefiltert, um den gewünschten Ausgangsgleichstrom zu erhalten. Bspw. wird ein Wechselstrom von einem konventionellen Gleichrichterbrückenschaltkreis gleichgerichtet, von einem konventionellen kapazitiven Filter (oder einem LC-Filter) zur Erzeugung eines ungeregelten Gleichstromes gefiltert, und ein Schalttransistor (oder eine Transistorschaltung) formt diesen Gleichstrom um in eine hochfrequenzpulsmodulierte Wellenform (d.h. eine Wellenform, die einen positiven Impuls aufweist, der von einem Null-Voltintervall, von einem negativen Impuls, von einem weiteren Null-Voltintervall usw. gefolgt wird). Diese Wellenform wird der Primärwicklung eines Transformators zugeführt und das Sekundärsignal wird gleichgerichtet, um einen unipolaren Pulsstrom mit einem Arbeitstakt zu erzeugen, der eine Funktion der An- und Auszeiten des Schalttransistors bzw. der Schalttransistoren ist. Der gepulste Strom wird gefiltert (bspw. von einem konventionellen LC-Filter), um die gewünschte Ausgangsgleichspannung zu erzeugen.

Die derzeit verwendeten bekannten Versorgungssysteme sind besonders wirksam in einem Bereich von 1000 bis 1500 W Ausgangsleistung. Die maximal zulässige Belastbarkeit von Transistoren bewirkt, daß Standardumformer bis auf eine Ausgangsleistung von 1500 W begrenzt werden. Daher werden dann, wenn mehr Gleichstrom benötigt wird, bzw. eine höhere Gleichstromenergie erforderlich ist, in typischer Weise mehrere derartiger Versorgungsgeräte in Parallelschaltung miteinander verbunden, um die beachtlichen Schwierigkeiten zu vermeiden, die dabei entstehen, ein einziges Versorgungsgerät mit einer hohen Ausgangsenergie zu entwickeln. Wenn bspw. ein Computerhersteller 5 V bei 1000 A fordert, werden in typischer Weise vier Versorgungsgeräte bei 5 V und 300 A parallel zueinander geschaltet. Im Idealfall würde jedes Versorgungsgerät mit 250 A und 5 V die gemeinsame Last versorgen, aber in der Praxis ist dies nicht der Fall wegen der jeweiligen Ausgangsspannungen, Ausgangsimpedanzen und Temperaturkoeffizienten, die gering, aber signifikant genug schwanken, so daß die Aufteilung ungleichmäßig wird. Das typische Ergebnis besteht darin, daß das Versorgungsgerät, das zu einem bestimmten Zeitpunkt zufälligerweise die höchste Ausgangsspannung erzeugt, den gesamten Strom liefert und dies auch tun kann, bis seine Ausgangsspannung durch den Ausgangsstrom-Begrenzungsschaltkreis reduziert wird, der in typischer Weise in solchen Fällen benutzt wird. Dann würde das Versorgungsgerät mit der nächsthöchsten Ausgangsspannung den gesamten Strom, den er erzeugen kann, liefern, bis sein Strombegrenzungsschaltkreis seine Ausgangsspannung ebenfalls reduziert, wodurch einem anderen Versorgungsgerät aktiv zu werden ermöglicht wird. Da solche Strombegrenzungsschaltkreise den Strom in typischer Weise auf einen Wert von 110 % der Nennlast begrenzen (oder 330 A in diesem Falle), ist das Ergebnis bei vier parallelgeschalteten Versorgungsgeräten, daß zu irgendeinem Zeitpunkt drei von ihnen bei etwa 330 A arbeiten und das vierte nur wenig oder überhaupt keinen Strom liefert. Natürlich ist es bekannt, daß dann, wenn ein Versorgungsgerät bei seiner absolut maximalen Leistung arbeitet, seine Lebensdauer signifikant reduziert wird. Das einfache Hinzufügen von mehr Versorgungsgeräten in ein derartiges Parallelsystem löst das Problem nicht, weil unter diesen Bedingungen ein zusätzliches Versorgungsgerät ebenso entweder bei maximaler Last oder bei
kleiner oder überhaupt keiner Last arbeiten wird.

Es sind viele Versuche gemacht worden, dieses Problem zu
lösen. Es sind bspw. Schaltkreise vorgeschlagen worden,
die den Ausgangsstrom jeden Versorgungsgerätes messen
und ein Fehlersignal an die Versorgungsgeräte (im allgemeinen durch die Meßleitungen der einzelnen Geräte)
übermitteln, um den Strom aufgeteilt zu halten. Jedoch
bedeutet dies, daß zusätzliche Schaltkreise vorgesehen
werden müssen, die für jede Anwendung geeignet sein müssen, wobei dem Einfluß bestimmter Faktoren, wie z.B.
Anzahl der parallelgeschalteten Versorgungsgeräte, Temperaturkoeffizient und Eigenschaften der Versorgungsleitungen von den einzelnen Versorgungsgeräten zur gemeinsamen Last, Rechnung zu tragen ist. Daher ist das System
komplex und schwierig zu stabilisieren, insbesondere
dann, wenn die Anzahl der einzelnen Versorgungsgeräte
ansteigt.

Es sind Versuche gemacht worden, einen Steuerschaltkreis
zu benutzen, der parallel zu anderen Versorgungsgeräten
so geschaltet werden kann, daß er die gleichmäßige Aufteilung forciert. Es ist jedoch dann schwierig, eine
Stabilisierung zu erreichen, wenn die Anzahl der Versorgungsgeräte ansteigt, und es ist schwierig, dies dann zu
erreichen, wenn die Ausgangsspannungen der parallelgeschalteten Versorgungsgeräte veränderbar sein sollen.
Derartige Einrichtungen sind in den US-PSen 3 521 150,
4 194 147, 3 521 150, 4 194 147, 4 359 679 und 4 371 919
beschrieben worden.

Im Gegensatz zu den oben beschriebenen Versuchen soll ein Stromversorgungssystem der eingangs genannten Art geschaffen werden, bei dem diese und andere Probleme vermieden werden, ohne daß man einen externen Schaltkreis verwenden muß, und bei dem verschiedene Ausgangsspannungen eingestellt bzw. gewählt werden können.

Diese Aufgabe wird bei einem System der eingangs genannten Art gelöst durch das Kennzeichen des Anspruches 1.

Erfindungsgemäß werden also zwei oder mehr Stromversorgungsgeräte so aufgebaut, daß sie so gleich wie möglich bezogen auf die Ausgangsspannung und die Ausgangsimpedanz bei einer geforderten Last und in geforderten Temperaturbereichen sind; ihre Ausgangsspannungen sind so gesteuert, daß sie die Last so gleichmäßig wie möglich auf die einzelnen Versorgungsgeräte verteilen. Die einzelnen Energieversorgungsgeräte sind so auf einander abgestimmt, daß ihre Anfangs-Nenn-Ausgangsspannungswerte im wesentlichen einander gleich sind, ebenso wie die Änderungen, mit denen die Ausgangsspannungen mit den Ausgangsströmen sinken. Die Versorgungsgeräte umfassen Einrichtungen, die den Betrieb der Schaltkreise steuern, die selbst wiederum die Ausgangsspannungen und Ausgangsströme im wesentlichen unabhängig von den Eigenschaften (z.B. Widerstand) der Versorgungsleitungen, die die Ausgänge der Netzgeräte mit der Last verbinden, überwachen und steuern. Die erfindungsgemäßen Versorgungsgeräte sind mit der Last nur über die konventionellen Versorgungsleitungen und Meßleitungen verbunden und erfordern keine andere spezielle Verbindung.

Anhand der Zeichnung, in der ein Ausführungsbeispiel der Erfindung dargestellt ist, soll die Erfindung näher erläutert und beschrieben werden.

Es zeigt

Fig. 1    ein Blockdiagramm einer Ausführungsform der
          Erfindung,

Fig. 2    ein Blockdiagramm in detaillierter Darstellung
          eines der Versorgungsgeräte, die in Figur 1
          parallelgeschaltet dargestellt sind, und

Fig. 2a   das Blockdiagramm gemäß Fig. 2 mit eingetragenen Bezeichnungen und Wert- bzw. Maßangaben.

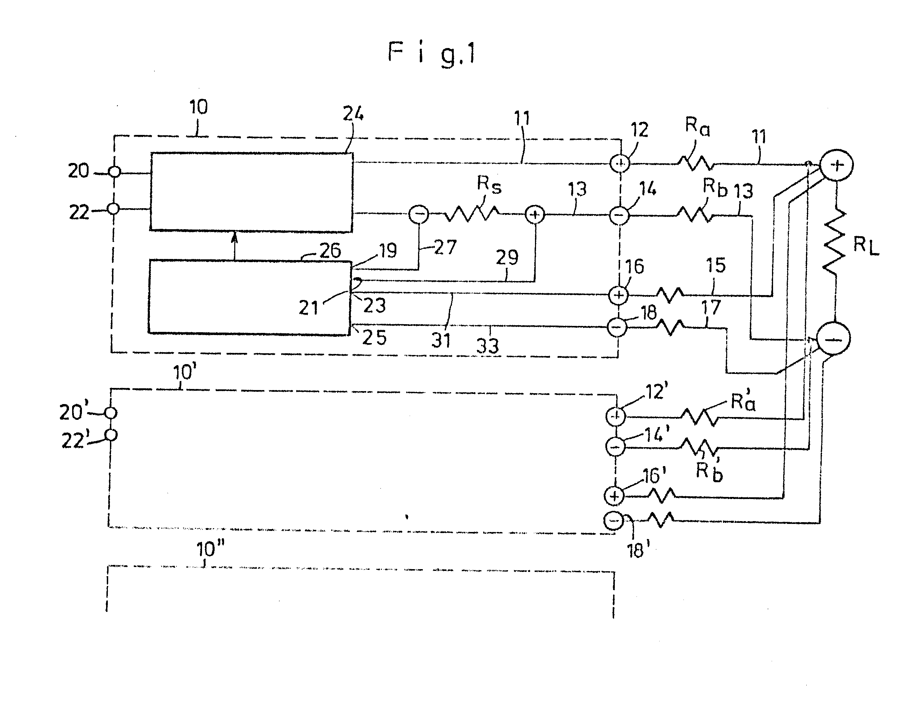

Es sei nun bezug genommen auf die Figur 1.

Eine Anzahl von Versorgungsgeräten 10, 10', 10" etc.
sind parallel geschaltet, um eine gemeinsame Last (Verbraucher) RL mit Gleichstrom zu versorgen. Da die Versorgungsgeräte einander im wesentlichen bis auf unvermeidbare Änderungen der Bauteilcharakteristiken gleich
sind, soll lediglich das Versorgungsgerät 10 näher beschrieben werden. Es besitzt einen positiven Ausgang 12
zum Anschluß an die positive Seite des gemeinsamen Verbrauchers RL über eine positive Versorgungsleitung 11
mit dem Kabelwiderstand RA, einen negativen Ausgang 14
zum Anschluß an die negative Seite des gemeinsamen Verbrauchers über eine negative Versorgungsleitung 13 mit
dem Widerstand RB, einen positiven Meßeingang 16 zum Anschluß an die positive Seite des Verbrauchers über einen
Meßleiter 15 mit einem nicht bezeichneten Leitungswiderstand und einen negativen Meßeingang 18 zum Anschluß an
die negative Seite des gemeinsamen Verbrauchers RL über
eine negative Meßleitung 17 mit einem nicht bezeichneten
Leitungswiderstand. Dem Stromwandler und den Ausgangsfilter des Versorgungsgerätes 10 wird über Eingangsan schlüsse 20 und 22 Energie zugeführt. Bei dem dargestellten Beispiel dienen die Anschlüsse 20 und 22 zur Verbindung mit einer ungeregelten Gleichstromquelle bspw. mit dem Ausgang eines Stromkreises, der mit einer Wechselstromquelle verbunden ist und der diesen Strom gleichrichtet und filtert, bspw. dadurch, daß eine Technik benutzt wird, die ähnlich derjenigen ist, die anhand der Figur 1 der US-PS 4163 906 erläutert ist, wo eine Wechselstromquelle mit der Primärwicklung eines Transformators mit einer Vielzahl von Sekundärwicklungen verbunden ist, die selbst mit Gleichrichtern und Glättungskondensatoren verbunden sind. Die anderen parallelgeschalteten Versorgungsgeräte 10' besitzen entsprechende Anschlüsse 20', 22' zur Zufuhr ungeregelten Stromes, entsprechende Ausgänge 12', 14' zur Verbindung mit dem gemeinsamen Verbraucher RL über entsprechende Versorgungsleitungen, und entsprechende Meßeingänge 16', 18' zur Verbindung mit dem gemeinsamen Verbraucher RL über entsprechende Meßleitungen. Während die Figur 1 ein System zeigt, in dem jeder Ausgang mit dem Verbraucher über seine eigene positive oder negative Versorgungsleitung verbunden ist, sollte es klar sein, daß die Erfindung auch auf andere Verbindungsarten in gleicher Weise anwendbar ist, z.B. dann, wenn die positiven Ausgänge mit einem positiven Bus verbunden sind, der umgekehrt mit der positiven Seite des Verbrauchers über eine einzige Leitung verbunden ist, und wenn die negativen Ausgänge mit einem negativen Bus verbunden sind, der mit der negativen Seite des Verbrauchers ebenfalls über eine einzige Leitung verbunden ist, und z.B. dann, wenn eine Kombination von Einzelleitungen und Busses verwendet wird. In gleicher Weise können die Eingangsanschlüsse 20,22; 20',22' etc. mit einer eigenen ungeregelten Gleichstromquelle für jedes Versorgungsgerät 10, 10' etc. oder mit einer gemeinsamen ungeregelten Gleichstromquelle über eigene Leitung für die jeweiligen Versorgungsgeräte oder über Busses oder über eine Kombination von eigenen Leitungen oder Busses verbunden sein.

Wie dargestellt anhand des Versorgungsgerätes 10, besitzt jedes Versorgungsgerät einen Stromumrichter und
ein Ausgangsfilter 24, welche wie bei den Schalt-Umrichtern gemäß der o.g. Patente ungeregelten Gleichstrom
aufnehmen und ihn in geregelten Ausgangsgleichstrom mittels eines internen Schaltkreises umformen, dessen Arbeitszyklus so gesteuert ist, daß die Ausgangsspannung
auf einer gewünschten Höhe bleibt. Erfindungsgemäß wird
dieser Arbeitszyklus durch einen Überwachungs- und Steuerschaltkreis 26 bestimmt, der zwei Eingangsanschlußpaare 19, 21 bzw. 23, 25 aufweist: ein Paar 19, 21 ist über
Leitungen 27, 29 mit den beiden Seiten eines Strommeßshuntwiderstandes RS in der Versorgungsleitung 13 und
das andere Paar 23, 25 ist über ein Paar Leitungen 31,
33 mit den Meßeingängen 16, 12 des Versorgungsgerätes
verbunden. Das Signal, das über die Leiter 27, 29 über
den Shuntwiderstand RS erzeugt wird, erlaubt es dem
Schaltkreis 26, den Ausgangsstrom, den das Versorgungsgerät gerade erzeugt, zu erfassen und zu überwachen (zu
verfolgen), und das über die Leiter 31, 33 von dem Meßeingang 16, 12 erzeugte Signal ermöglicht es dem Schaltkreis 26, die Ausgangsspannung des Versorgungsgerätes zu
überwachen und zu erfassen (zu verfolgen). Aufgrund dieser Signale und entsprechend einer inneren Präzisionsbezugsspannung steuert der Schaltkreis 26 den Arbeitszyklus des Stromumwandlers und des Ausgangsfilters 24, um
an den Ausgängen 12 und 14 die gewünschte Ausgangsspannung zu erzeugen und zwar in einer Weise, die sicherstellt, daß die Last bzw. der Versorger im wesentlichen gleichmäßig zwischen den einzelnen Versorgungsgeräten aufgeteilt ist.

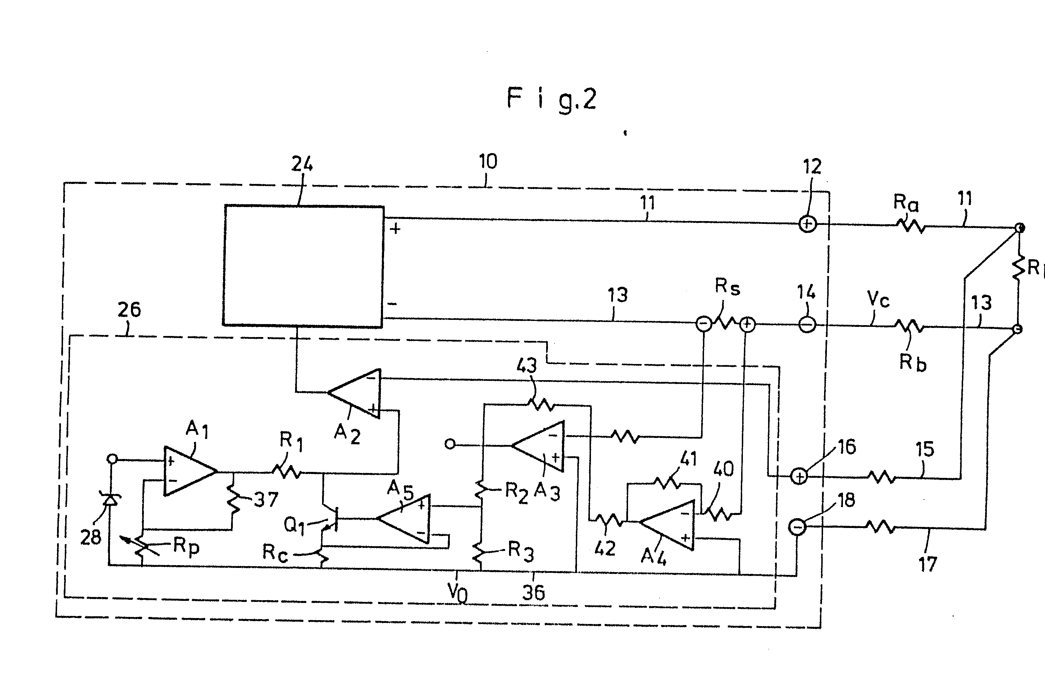

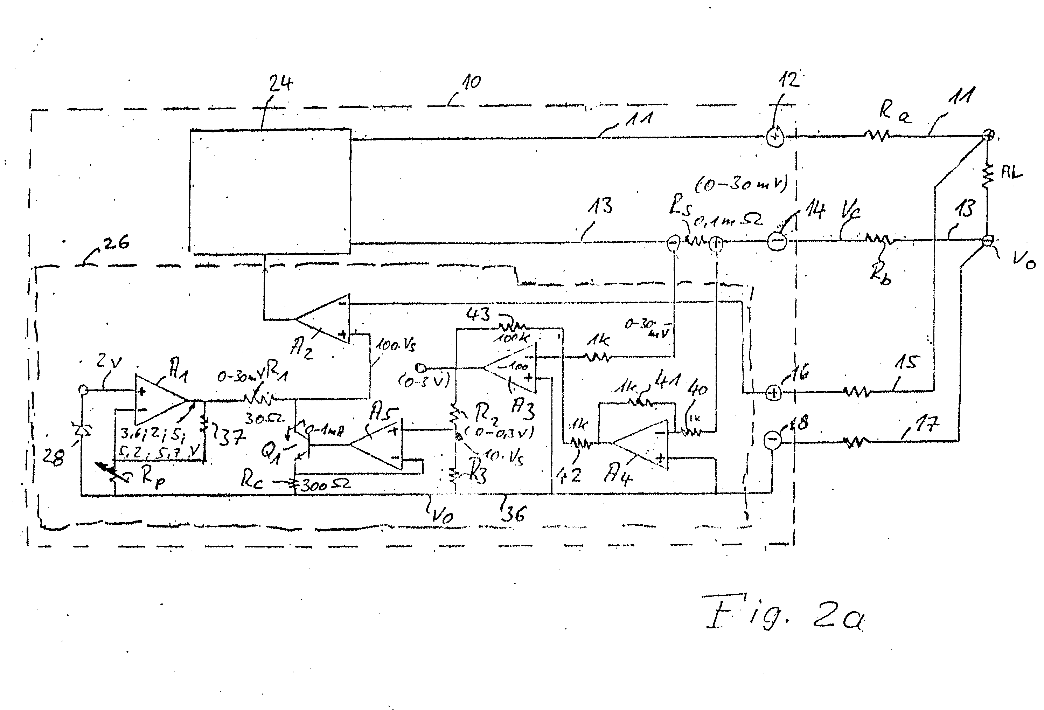

Es sei nun bezug genommen auf die Figur 2, in der die gleichen Elemente mit den gleichen Bezugsziffern wie in Figur 1 bezeichnet sind.

Der Überwachungs- und Steuerschaltkreis 26 umfaßt eine mit dem negativen Meßeingang 18 verbundene Leitung 17 als Nullreferenz. Ein Präzisionsspannungsreferenz-Schaltkreis umfaßt ein Präzisionsreferenzelement 28, das eine ausgewählte Nennspannung bezogen auf das Nullreferenzsignal für den positiven Eingang des Referenzsignalverstärkers A1 erzeugt, und einen veränderlichen Präzisionswiderstand Rp (Programmierwiderstand), der zwischen dem negativen Eingang des Referenzverstärkers A1 und der das Nullreferenzsignal $V_O$ führenden Leitung 36 (Nullreferenz) geschaltet ist und dessen Hochspannungsseite mit dem Ausgang des Referenzverstärkers A1 über einen nicht bezeichneten Rückkopplungswiderstand 37 verbunden ist. In der speziellen, in der Zeichnung dargestellten Ausführungsform erzeugt das Referenzelement 28 eine Nennausgangsspannung von 2V, und am Ausgang des Referenzverstärkers A1 steht - abhängig von der Einstellung des Programmierwiderstandes Rp eine Nennausgangsspannung von 2; 3,6; 5; 5,2 oder 5,7 V an. Diese Spannungswerte sind ebenso wie die Spannungs- oder Stromwerte oder die spezifischen Schaltkreiskomponenten der nachfolgenden Beschreibung und ihre im folgenden angegebenen Werte nur beispielhaft angegeben und selbstverständlich sollen sie nicht als Begrenzung des Schutzumfangs der in den beigefügten Ansprüchen definierten Erfindung angesehen werden.

Ein Fehlerverstärker A2 (error amplifier A2) nimmt die Nennausgangsspannung des Referenzverstärkers A1 über einen Reihenwiderstad R1 an seinem positiven Eingang auf, wobei sein negativer Eingang mit dem positiven Meßeingang 16 verbunden ist, und gibt sein Ausgangssignal auf den Stromumrichter und Ausgangsfilter 24, um dessen Arbeitstakt zu steuern, d.h. um den Arbeitstakt eines darin befindlichen Schalttransistors in der Weise zu steuern, wie in den oben angegebenen amerikanischen Patentschriften bechrieben ist. Bekanntlich steuert der Arbeitstakt die Spannung an den Ausgängen 12 und 14 des Versorgungsgerätes. Ein Vertärker A4 für Kabelspannungsabfallabweichungen (cable drop offsetamplifier, im folgenden kurz Verstärker A4 genannt) ist mit seinem positven Eingang mit der Nullreferenz (36) und mit seinem negativen Eingang mit der Lastseite des Shunt-Widerstands RS über einen 1K - Widerstand 40 verbunden und zwischen seinem negativen Eingang und seinem Ausgang ist ein 1K Rückkopplungswiderstand 41 geschaltet. Ein Strommeßverstärker A3 ist mit seinem negativen Eingang mit dem Ausgang des Verstärkers A4 über einen 1K-Widerstand 42 und mit seinem positiven Eingang mit der Leitung 36 (Nullreferenz) verbunden und zwischen seinem negativen Eingang und seinem Ausgang befindet sich ein 100K-Rückkopplungswiderstand 43. Ein aus Widerständen R2 und R3 zusammengesetzter Spannungsteiler ist zwischen dem Ausgang des Strommeßverstärkers A3 und der Leitung 36 (- Nullreferenz) geschaltet und ein Stromabfallverstärker A5 (droop current amplifier, im folgenden kurz Verstärker A5 genannt),ist mit seinem positiven Eingang an die Verbindung zwischen den Widerständen R2 und R3 angeschlossen und sein negativer Eingang mit der Leitung 36 (Nullreferenz) über einen Widerstand RC (300 ohm) verbunden. Der Ausgang des Verstärkers A5 ist mit der Basis eines Transistors Q1 verbunden, dessen Kollektor mit dem positiven Eingang des Fehlerverstärkers A2 und dessen Emitter mit der Hochspannungsseite des Widerstandes RC
verbunden ist.

Bei dem Ausführungsbeispiel sind die Anordnung und die
Auswahl der einzelnen Bauelemente so, daß die Nennausgangsspannung des Referenzverstärkers A1 (z.B. 5V) linear um einen Bereich abgesenkt wird, der zwischen 0 bis
30 millivolt liegt, bevor sie dem Eingang des Fehlerverstärkers A2 zugeführt wird, wenn sich der Ausgangsstrom
durch den Shunt-Widerstand RS von 0 bis 30 A verändert,
um den Stromumrichter und Ausgangsfilter 24 zu steuern,
so daß die Ausgangsspannung an den Ausgängen 12 und 14
in ähnlicher Weise von 5V auf 4,970 V abfällt, wobei der
Ausgangsstrom vom 0 bis 300 A ansteigt. Zu diesem Zweck
und bei diesen Spannungs- und Stromwerten und Bauelementen wird ein Spannungsabfall von einem Millivolt über
den Shunt-Widerstand für jede 10 A Ausgangsstrom, der
durch den Shunt-Widerstand fließt, auftreten, wenn der
Wert des Shunt-Widerstandes RS 0,1 milliohm beträgt. Der
Verstärker A4 vergleicht den Spannungsabfall VC über den
Widerstand Rb der negativen Versorgungsleitung 12 mit
der Spannungshöhe der Nullreferenz, die die selbe ist,
wie die Spannungshöhe auf der negativen Seite der Last,
weil der Strom in der Meßleitung vernachlässigbar und
die Spannung in dieser daher so dicht bei Null liegt,
daß sie vernachlässigt werden kann. Der Verstärker A4
vergleicht daher den Spannungsabfall über der Leitung 13
des Ausgangs 14 mit der Spannung auf der negativen Seite
der Last und erzeugt ein Ausgangssignal, das in seiner
Größe gleich ist, dem Spannungsabfall über der Versorgungsleitung, die in der Zeichnung mit VC bezeichnet
ist, aber unterschiedliche Polarität aufweist. Diese
Spannung (-VC) wird dann in dem Verstärker A3 der Spannung auf der negativen Seite des Shunt-Widerstandes RS aufaddiert, die gleich ist der Summe von VC und VS (=der Spannungsabfall über dem Shunt-Widerstand). Am Eingang des Verstärkers A3 liegt daher (- VC + (VC + VS)) an, die sich zu VS hinzuaddieren sollte. Das Ausgangssignal des Verstärkers A3 (im Hinblick auf die angezeigte Kette der Verstärker A3 und A4) beträgt daher hundertmal die Spannung VS über dem Shunt-Widerstand, d.h. sie variiert von 0 bis 3 V, wenn der Ausgangsstrom über den Shunt-Widerstand RS von 0 bis 300 A variiert. Der Spannungsteiler, der aus den beiden Widerständen R2 und R3 gebildet ist, teilt die Ausgangsspannung bzw. das Ausgangssignal des Verstärkers A3 durch 10 und die Spannung an der Verbindungsstelle der Widerstände R2 und R3 ändert sich daher von 0 bis 0,3V, wenn sich der Ausgangsstrom von 0 bis 300 A ändert. Der Verstärker A5 arbeitet in Verbindung mit dem Transistor Q1 so, daß er diese Spannung über den Widerstand RC, der ein 300 Ohm-Widerstand ist, aufrecht erhält. Wenn die Spannung am positiven Eingang des Verstärkers A5 von 0 bis 300 millivolt variiert, dann ändert sich der Strom durch den Widerstand RC von 0 bis 1 milliampere, da der Kollektorstrom des Transistors Q1 im wesentlichen gleich dem Strom durch den Widerstand RC ist. Der durch den 30 Ohm-Widerstand R1 gezogene Strom sorgt daher dafür, daß die Referenzspannung, die am Ausgang des Verstärkers A1 erzeugt wird, über einen von 0 bis 30 millivolt sich ändernden Wert (für den Anstieg des Ausgangsstromes von 0 bis 300 A) abfällt, bevor sie an den positiven Eingang des Fehlerverstärkers A2 abgegeben wird. Natürlich steuert der Fehlerverstärker A2 den Stromumrichter und Ausgangsfilter 24, um den negativen Eingang des Verstärkers A2 dazu zu bringen, seinen positiven Eingangssignal zu folgen, d.h. die Spannung über den Ausgängen 12 und 14 dazu zu bringen die Spannungsversorgung für den positiven Eingang des Fehlerverstärkers A2 zu ziehen. (to track the voltage
supply to the positive input of error amplifier A2).

Der Effekt besteht darin, ein absolutes Referenzsignal
für den positiven Eingang des Fehlerverstärkers A2 zu
erzeugen, das dazu verwendet werden kann, die Ausgangsspannung an der Verbraucherlast auf exàkt der Nennausgangsspannung des Referenzverstärkers A1 zu halten, wenn
der Ausgangsstrom Null ist, und den Wert des absoluten
Referenzsignales am positiven Eingang des Fehlerverstärkers A2 so abzusenken, daß der Ausgang an der Verbraucherlast abfällt von 0 auf 30 millivolt unter der Nennspannung am Ausgang des Referenzverstärkers A1, wenn der
Ausgangsstrom von 0 auf 300 A ansteigt. Der Effekt besteht darin, eine Versorgung zu schaffen, deren Thevenin-Äquivalent eine Spannungsquelle mit der gewünschten
Ausgangsspannung mit einer Reihenimpedanz von 0,1 milliohm ist. Dies ist im wesentlichen das, was an den Anschlüssen der Verbraucherlast ansteht, und es funktionert, ebenso ohne wesentliche Änderungen des Leitungswiderstandes RA und RB beachten zu müssen. Das System arbeitet wie beschrieben, vorausgesetzt, daß die Nennausgangsspannung an dem Ausgang des Referenzverstärkers A1
im wesentlichen stabil über dem Beriebstemperaturbereich
und Leitungs- und Lastwirkungen und über der Zeit
bleibt. In ähnlicher Weise sollte der Fehlerverstärker
A2 keinen unannehmbaren Fehlerabfall über den gleichen
Betriebsparametern erzeugen. Die Komponenten sollten so
ausgewählt und miteinander verbunden werden, daß die
Ausgangsspannung über den Ausgängen 12 und 14 jedes Versorgungsgerätes auf innerhalb 3 millivolt der gewünschten Ausgangsspannung in einem Temperaturbereich von 0
bis 70°, bei einer Veränderung der Wechselstromeingangsspannung von 185 bis 250 V und auf einer halben Spannungsänderung in dem Widerstand der Versorgungsleitungen gehalten werden kann. Das Ausgangssignal des Referenzverstärkers A1 und die oben angedeuten Stabilitätsparameter sollten im wesentlichen identisch sein, wie die einzelnen Versorgungsgeräte, die zur Versorugng einer gemeinsamen Last parallelgeschaltet sind, damit die Last im wesentlichen gleichmäßig auf die einzelnen Versorgungsgeräte verteilt wird.

Ein besonderer Vorteil des oben beschriebenen Systems besteht darin, daß jedes Versorgungsgerät unabhängig ist und durch einen inneren Schaltkreis gesteuert bzw. geregelt wird, unabhängig da von, wie seine Ausgangsanschlüsse mit der Verbraucherlast verbunden sind. Deswegen ist es nicht notwendig, ein Versorgungsgerätesystem für eine besondere Anwendung herzustellen, und es ist nicht notwendig, Veränderungen oder Verstellungen vorzunehmen, wenn die Anzahl der parallelgeschalteten Versorgungsgeräte verändert wird. Da darüberhinaus jedes individuelle Versorgungsgerät bezüglich der Regelung seiner Ausgangsspannung selbst versorgt ist, besteht keine Notwendigkeit, äußere Steuerschaltkreise oder Schaltkreise vorzusehen, die die Unterschiede zwischen den Ausgängen der einzelnen Versorgungsgeräten wie in früheren Vorschlägen ausgleichen. Was dafür sorgt, daß die einzelnen Versorgungsgeräte in dem erfindungsgemäßen System die Last gleichmäßig verteilen, ist dies, daß ihre inneren Eigenschaften aufeinander abgestimmt und ausreichend stabil gehalten sind, um im wesentlichen identische Ausgangsspannungen und Ausgangsimpedanzen für die Last unter allen Bedingungen und Umständen innerhalb des Betriebsbereiches bereitzustellen.

Selbstverständlich soll durch die oben angegebene Beschreibung die Erfindung nicht auf das Ausführungsbeispiel beschränkt werden; es gibt eine Reihe von Modifikationen, ohne daß die Erfindung verlassen wird.

Ansrüche

1. Stromversorgungssystem mit einer Vielzahl von Versorgungsgeräten (10, 10'...,), diezur Versorgung einer gemeinsamen Last ($R_L$) (Verbraucher) mit Gleichstrom parallel geschaltet sind, dadurch gekennzeichnet, daß jedes Versorgungsgerät (10, 10'...) einen Schaltkreis (26) aufweist, der den Ausgangsstrom je eines Versorgungsgerätes (10, 10'...) überwacht und dessen Ausgangsspannung steuert, so daß sie im wesentlichen linear mit einer ausgewählten Neigung von einem ausgewählten Anfangswert aus bei Ansteigen des Ausgangsstromes über einen ausgewählten Strombereich abfällt, und daß die Versorgungsgeräte (10, 10') so aufeinander abgestimmt sind, daß die Anfangsnennspannungen und die Spannungsabfälle (Neigungen) der einzelnen Versorgungsgeräte im wesentlichen identisch sind und daß die Last von den einzelnen Versorgungsgeräten gleich aufgeteilt versorgt wird."

2. Stromversorgungssystem nach Anspruch 1, dadurch gekennzeichnet, daß jedes Versorgungsgerät (10, 10'...) einen Strommeß-Shunt-Widerstand ($R_S$) in dem Strompfad (13) für den Ausgang (14) aufweist und daß jeder Überwachungs- und Steuerschaltkreis (26) einen Präzisionsspannungsreferenzschaltkreis (26), der ein Ausgangssignal erzeugt, daß der Anfangsnennausgangsspannung entspricht, einen weiteren Schaltkreis, der den Spannungsabfall über dem Shunt-Widerstand ($R_S$) erfaßt, einen weiteren Schaltkreis, der das Ausgangssignal des Referenzschaltkreises proportional zu dem erfaßten Spannungsabfall vermindert, und einen weiteren Schaltkreis aufweist, der abhängig von dem verminderten Referenzschaltkreisausgangssignal und der gerade vorhandenen Spannung über der gemeinsamen Last die Ausgangsspannung jedes Versorgungsgerätes steuert.

3. Versorgungssystem nach Anspruch 2, gekennzeichnet durch Mittel, mit denen die Verminderung des Referenzsignales im wesentlichen unabhängig von den Widerständen der das Versorgungsgerät und die Last miteinander verbindenden Leitungen über einen ausgewählten Bereich von Leitungswiderstandswerten erzielbar ist.

4. Versorgungssystem mit einer Vielzahl von parallel angeordneten Versorgungsgeräten, von denen jedes einen positiven und einen negativen Ausgangsanschluß (12, 14) zur Verbindung jedes Versorgungsgerätes mit der Last mittels Kabel, einen Strommeß-Shunt-Widerstand ($R_S$) am negativen Ausgangsanschluß (14) und einen positiven und negativen Meßeingangsanschluß für Meßleitungen aufweist, dadurch gekennzeichnet, daß jedes Versorgungsgerät (10, 10'...) einen Überwachungs- und Steuerschaltkreis (24), der mit dem negativen Eingangsmeßanschluß (18) zur Verwendung als Null-Referenzsignal verbunden ist und ein Präzisionsreferenzelement (28) umfaßt, das eine ausgewählte Nennspannung relativ zu dem Nullreferenzsignal erzeugt, einen Referenzverstärker (A1), der die Nennspannung an seinem positiven Eingang aufnimmt, einen Programmierwiderstand (RP), der zwischen dem negativen Eingang des Referenzverstärkers (A1) und der Nullreferenz (VO, 36) geschaltet ist und einen wählbaren Widerstand besitzt, einen Fehlerverstärker (A2), einen Reihenwiderstand (R1) zwischen dem Ausgang des Referenzverstärkers (A1) und dem postiven Eingang des Fehlerverstärkers (A2), eine den negativen Eingang des
Fehlerverstärkers (A2) mit dem positiven Meßeingangsanschluß verbindende Leitung, wobei der Ausgang des Fehlerverstärkers daran angeschlossen ist, um die Spannung
über die Ausgangsanschlüsse des Versorgungsgerätes zu
steuern, einen Leitungsausfallverstärker (A4), dessen
positiver Eingang mit der Nullreferenz und dessen negativer Eingang mit der Anschlußseite des Shunt-Widerstandes (RS) verbunen ist, einen Strommeßverstärker, dessen
negativer Eingang mit dem Ausgang des Leitungsausfallverstärkers (A3) und dessen positiver Eingang mit der
Nullreferenz verbunden ist, einen zwischen dem Ausgang
des Strommeßverstärkers und der Nullreferenz geschalteten Spannungsteiler (R2, R3), einen Stromabfallverstärker (A5) (DROUP CURRENT AMPLIFIER), dessen positiver
Eingang mit dem Spannungsteiler und dessen negativer
Eingang mit der Nullreferenz verbunden ist, und einen
Transistor (Q1)aufweist, dessen Kollektor an den positiven Eingang des Fehlerverstärkers, dessen Emitter mit
der Nullreferenz und dem negativen Eingang des Stromabfallverstärkers und dessen Basis mit dem Ausgang des
Stromabfallverstärkers verbunden sind, und daß die einzelnen Elemente so ausgewählt und miteinander verschaltet sind, daß die Spannung über den Ausgangsanschlüssen
jedes einzelnen Versorgungsgerätes linear von einem ausgewählten Wert bei Ansteigen des Stromflusses durch den
Shunt-Widerstand über einen ausgwählten Strombereich
abfallen und die Ausgangsspannung gegenüber den Stromcharakteristiken der jeweiligen Versorgungsgeräte im
wesentlichen gleich gehalten werden kann wie zwischen
unterschiedlichen Versorgungsgeräten, so daß auf diese
Weise eine im wesentlichen gleiche Lastverteilung bewirkt wird.

5. Stromversorgungsgerät gekennzeichnet durch einen Stromumrichter- und Ausgangsfilterschaltkreis, der ungeregelten Gleichstrom aufnimmt und geregelten Gleichstrom für eine Last erzeugt, wobei der Schaltkreis eine Schalteranordnung aufweist, deren Arbeitstakt die Spannungshöhe des geregelten Gleichstromes steuert, und durch einen Überwachungs- und Steuerschaltkreis, der den Stromwert für die Last überwacht und den Spannungswert des geregelten Gleichstromes steuert, so daß diese im wesentlichen linear mit einer ausgewählten Neigung von einem ausgewählten Anfangsnennwert bei Ansteigen des Stromes für die Last über einen ausgewählten Bereich des Laststromes abfällt, wobei die Steuerung durch Steuern des Arbeitstaktkreises der Schaltereinrichtung bewirkt wird.

6. Versorgungsgerät nach Anspruch 5 gekennzeichnet durch einen Strommeß-Shunt-Widerstand in dem Strompfad zur Last hin, wobei der Überwachungs- und Steuerkreis einen Präzisionsspannungsreferenzschaltkreis, der ein Ausgangssignal entsprechend dem Anfangsnennspannungswert erzeugt, ein den Spannungsabfall über den Shunt-Widerstand erfassenden Meßschaltkreis, einen weiteren Schaltkreis, der das Referenzschaltkreisausgangssignal proportional zu dem erfaßten Spannungsabfall vermindert, und einen weiteren Schaltkreis aufweist, der auf das verminderte Referenzschaltkreisausgangssignal und der gerade vorhandenen Spannung über der Last anspricht, um die Ausgangsspannungshöhe des geregelten Gleichstromes zu steuern.

7. Versorgungsgerät nach Anspruch 6 gekennzeichnet durch Mittel, mit denen die Verminderung des Referenzsignales im wesentlichen unabhängig von den Widerständen der das Versorgungsgerät und die Last miteinander verbindenden Leitungen über einen ausgewählten Bereich von Leitungswiderstandswerten erzielbar ist.

# Fig.1

0143955

F i g.2

0143955

Fig. 2a

Europäisches
Patentamt

EUROPÄISCHER RECHERCHENBERICHT

**0143955**
Nummer der Anmeldung

EP 84 11 2388

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | IBM TECHNICAL DISCLOSURE BULLETIN, Band 25, Nr. 2, Juli 1982, Seiten 624-625, New York, US; D. AZZIS u.a.: "Parallel identical direct-mode DC-DC converters" <br> * Seiten 624-625 * | 1-3,5-7 | H 02 M 3/28 |
| X | US-A-3 824 450 (JOHNSON) <br><br> * Spalten 2-4 * | 1-3,5-7 | |
| X,D | US-A-4 194 147 (PAYNE) <br><br> * Spalte 4, Zeile 16 - Spalte 8, Zeile 10 * | 1-3,5,7 | |
| A | FR-A-1 585 102 (BAZIN) <br> * Seite 2, Zeile 21 - Seite 4, Zeile 23 * | 4 | RECHERCHIERTE SACHGEBIETE (Int. Cl.4) <br><br> H 02 M 3/00 <br> G 05 F 1/00 |
| A | US-A-3 840 797 (AGGEN) <br> * Figur 4 * | 4 | |
| A | DE-A-2 901 396 (REGAN) <br><br> & US - A - 4 359 147 (Kat. D) | | |
| D,A | US-A-4 371 919 (ANDREWS) <br><br> ---     -/- | | |

Der vorliegende Recherchenbericht wurde für alle Patentansprüche erstellt.

| Recherchenort <br> DEN HAAG | Abschlußdatum der Recherche <br> 31-01-1985 | Prüfer <br> BERTIN M.H.J. |
|---|---|---|

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| D,A | US-A-3 521 150 (BATES) | | |
| | ----- | | |

RECHERCHIERTE SACHGEBIETE (Int Cl 4)

Der vorliegende Recherchenbericht wurde für alle Patentansprüche erstellt.

| Recherchenort | Abschlußdatum der Recherche | Prüfer |
|---|---|---|
| DEN HAAG | 31-01-1985 | BERTIN M.H.J. |